# EUROPEAN PATENT APPLICATION

(11) **EP 4 521 811 A1**
(43) Date of publication of application: **12.03.2025**
(21) Application number: 22940623.6
(22) Date of filing: 06.05.2022
(51) Int. Cl.: H04W 24/10

(54) **MINIMIZATION OF DRIVE-TESTS (MDT) METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2022/091203
(87) International publication number: WO 2023/212929

(57) **Abstract**

The present disclosure provides a minimization of drive-tests (MDT) method and an apparatus, and a storage medium. The MDT method comprises: receiving non-public network (NPN)-related information sent by a network side device, wherein the NPN-related information is used for configuring logged MDT (101); and executing logged MDT on the basis of the NPN-related information (102). The present disclosure supports logged MDT in an NPN scenario, thereby expanding application scenarios of logged MDT and achieving high availability.

## Description

### TECHNICAL FIELD

The present disclosure relates to the field of communication technology, in particular to a Minimization of Drive-Tests (MDT) method, an apparatus, and a storage medium.

### BACKGROUND

A Non-Public Network (NPN) is introduced in Release 16 (R16) and a series of enhancements are performed on it in Release 17 (R17), but the enhancements related to a Self-Organized Network (SON) and an MDT have not been introduced. Considering that a scheme in the related art is relatively stable and has an excellent commercial deployment prospect, the enhancements of the SON and MDT with respect to the NPN are introduced in R18.

In a current protocol, a logged MDT is merely supported to be executed based on Public Land Mobile Network (PLMN)-related information configured by a network, and a logged MDT in a NPN scenario is not supported.

### SUMMARY

In order to overcome the problems existing in the related art, the present disclosure provides in some embodiments an MDT method, an apparatus, and a storage medium.

In a first aspect, the present disclosure provides in some embodiments an MDT method, applied to a terminal, including: receiving NPN-related information sent by a network side device, the NPN-related information being used to configure a logged MDT; and executing the logged MDT based on the NPN-related information.

Optionally, the executing the logged MDT includes at least one of: executing logged MDT measurement logging; or executing logged MDT measurement reporting.

Optionally, the NPN-related information includes at least one of: an MDT NPN list, the MDT NPN list including NPNs allowed to be logged and reported by the terminal; a logging area, the terminal executing the logged MDT measurement in the logging area; or a logging duration, the logging duration being used to indicate a duration of the logged MDT measurement executed by the terminal.

Optionally, the MDT NPN list is at least one of: a Closed Access Group (CAG) identity list; a Public Network Integrated NPN (PNI-NPN) identity list; a Network Identifier (NID) list; or a Stand-alone Non-Public Network (SNPN) identity list.

Optionally, a PNI-NPN identity includes at least one of: a Public Land Mobile Network (PLMN) identity; or a CAG identity.

Optionally, a SNPN identity includes at least one of: a PLMN identity; or a NID.

Optionally, the executing the logged MDT measurement logging includes at least one of: logging a NPN identity in the MDT NPN list; or logging a registration NPN identity of the terminal.

Optionally, the executing the logged MDT measurement logging includes: in response to the network side device configuring the MDT NPN list, logging the registration NPN identity of the terminal and the NPN identity in the MDT NPN list; or in response to the network side device not configuring the MDT NPN list, logging the registration NPN identity of the terminal.

Optionally, the executing the logged MDT measurement logging includes: in response to the terminal being located in a logging area configured by the network side device, executing the logged MDT measurement logging.

Optionally, the executing the logged MDT measurement logging includes: in response to the network side device not configuring a logging area, executing the logged MDT measurement logging in a cell under a NPN in the MDT NPN list.

Optionally, the executing the logged MDT measurement logging includes: in a SNPN, executing the logged MDT measurement logging on a New Radio (NR) frequency cell; and in a PNI-NPN, executing the logged MDT measurement logging on at least one of a NR frequency cell or a Long Term Evolution (LTE) frequency cell.

Optionally, the executing the logged MDT measurement reporting includes reporting measurement availability indication information to the network side device, and the measurement availability indication information is used to notify the network side device of an available measurement result logged by the terminal.

Optionally, the reporting the measurement availability indication information to the network side device includes: in response to a first reporting condition being met, reporting the measurement availability indication information to the network side device.

Optionally, the first reporting condition includes at least one of: that a registration NPN of the terminal is a NPN stored in the terminal; or that the terminal enters a connected state.

Optionally, the reporting the measurement availability indication information to the network side device includes: reporting the measurement availability indication information to the network side device via a designated Radio Resource Control (RRC) message.

Optionally, the MDT method further includes adding signaling-based MDT configuration availability indication information in the designated RRC message, and the signaling-based MDT configuration availability indication information is used to notify the network side device of whether or not a signaling-based MDT configuration is available on the terminal.

Optionally, the MDT method further includes: indicating a PLMN identity or a NPN identity of a logged cell in a reported measurement report.

Optionally, the measurement report includes at least one of following report parameters: a measurement result of a serving cell; an available measurement result of a neighboring cell, the neighboring cell including at least one of an intra-frequency neighboring cell, an inter-frequency neighboring cell or an inter-system neighboring cell; a time stamp; and terminal location information.

In a second aspect, the present disclosure provides in some embodiments an MDT method, applied to a network side device, including: sending NPN-related information to a terminal. The NPN-related information is used to configure a logged MDT.

Optionally, the NPN-related information includes at least one of: an MDT NPN list, the MDT NPN list including NPNs allowed to be logged and reported by the terminal; a logging area, the terminal executing the logged MDT measurement in the logging area; or a logging duration, the logging duration being used to indicate a duration of the logged MDT measurement executed by the terminal.

Optionally, the MDT method further includes: in response to determining that the terminal agrees to report location information in a registration NPN, configuring the MDT NPN list for the terminal.

Optionally, the MDT NPN list is at least one of: a CAG identity list; a PNI-NPN identity list; a NID list; or a SNPN identity list.

Optionally, a PNI-NPN identity includes at least one of: a PLMN identity; or a CAG identity.

Optionally, a SNPN identity includes at least one of: a PLMN identity; or a NID.

Optionally, the MDT method further includes receiving measurement availability indication information reported by the terminal, and the measurement availability indication information is used to notify the network side device of an available measurement result logged by the terminal.

In a third aspect, the present disclosure provides in some embodiments an MDT apparatus, applied to a terminal, including: a reception module configured to receive NPN-related information sent by a network side device, the NPN-related information being used to configure a logged MDT; and an execution module configured to execute the logged MDT based on the NPN-related information.

In a fourth aspect, the present disclosure provides in some embodiments an MDT apparatus, applied to a network side device, including: a sending module configured to send NPN-related information to a terminal. The NPN-related information is used to configure a logged MDT.

In a fifth aspect, the present disclosure provides in some embodiments a computer-readable storage medium storing therein a computer program. The computer program is used to execute the above-mentioned MDT method for the terminal.

In a sixth aspect, the present disclosure provides in some embodiments a computer-readable storage medium storing therein a computer program. The computer program is used to execute the above-mentioned MDT method for the network side device.

In a seventh aspect, the present disclosure provides in some embodiments an MDT apparatus, including: a processor; and a memory storing therein an instruction executable by the processor. The processor is configured to execute the above-mentioned MDT method for the terminal.

In an eighth aspect, the present disclosure provides in some embodiments an MDT apparatus, including: a processor; and a memory storing therein an instruction executable by the processor. The processor is configured to execute the above-mentioned MDT method for the network side device.

The technical solutions in the embodiments of the present disclosure have the following beneficial effects. In the embodiments of the present disclosure, the terminal executes the logged MDT based on the NPN-related information sent by the network side device. The present disclosure supports the logged MDT in a NPN scenario, expands an application scenario of the logged MDT, and achieves high availability.

It should be appreciated that, the above-mentioned general description and the following detailed description are for illustrative and explanatory purposes, but shall not be used to limit the embodiments of the present disclosure.

### BRIEF DESCRIPTION OF THE DRAWINGS

The drawings herein are incorporated into, and constitute a part of, the specification, show the embodiments of the present disclosure, and are used to explain a principle of the embodiments of the present disclosure together with the specification.
FIG. 1 is a flow chart of an MDT method according to the embodiment of the present disclosure;
FIG. 2 is another flow chart of the MDT method according to the embodiment of the present disclosure;
FIG. 3A is yet another flow chart of the MDT method according to the embodiment of the present disclosure;
FIG. 3B is still yet another flow chart of the MDT method according to the embodiment of the present disclosure;
FIG. 4A is still yet another flow chart of the MDT method according to the embodiment of the present disclosure;
FIG. 4B is still yet another flow chart of the MDT method according to the embodiment of the present disclosure;
FIG. 5 is still yet another flow chart of the MDT method according to the embodiment of the present disclosure;
FIG. 6 is still yet another flow chart of the MDT method according to the embodiment of the present disclosure;
FIG. 7 is still yet another flow chart of the MDT method according to the embodiment of the present disclosure;
FIG. 8 is still yet another flow chart of the MDT method according to the embodiment of the present disclosure;
FIG. 9 is still yet another flow chart of the MDT method according to the embodiment of the present disclosure;
FIG. 10 is still yet another flow chart of the MDT method according to the embodiment of the present disclosure;
FIG. 11 is still yet another flow chart of the MDT method according to the embodiment of the present disclosure;
FIG. 12 is still yet another flow chart of the MDT method according to the embodiment of the present disclosure;
FIG. 13 is still yet another flow chart of the MDT method according to the embodiment of the present disclosure;
FIG. 14 is still yet another flow chart of the MDT method according to the embodiment of the present disclosure;
FIG. 15 is still yet another flow chart of the MDT method according to the embodiment of the present disclosure;
FIG. 16 is a block diagram of an MDT apparatus according to the embodiment of the present disclosure;
FIG. 17 is another block diagram of the MDT apparatus according to the embodiment of the present disclosure;
FIG. 18 is a schematic view showing an MDT apparatus according to the embodiment of the present disclosure; and
FIG. 19 is another schematic view showing the MDT apparatus according to the embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of a same type from each other. For example, without departing from the scope of the present disclosure, first information may also be called as second information, and similarly second information may also be called as first information. Depending on the context, such a word as "if" may be construed as "when ...", "in the case that ..." or "in response to determining that ... ".

Considering that, in a current protocol, a logged MDT is merely supported to be executed based on PLMN-related information configured by a network, and the logged MDT in a NPN scenario is not supported. In order to solve this technical problem, the present disclosure provides the following MDT method.

The MDT method provided in the embodiments of the present disclosure will be described at first from a terminal side.

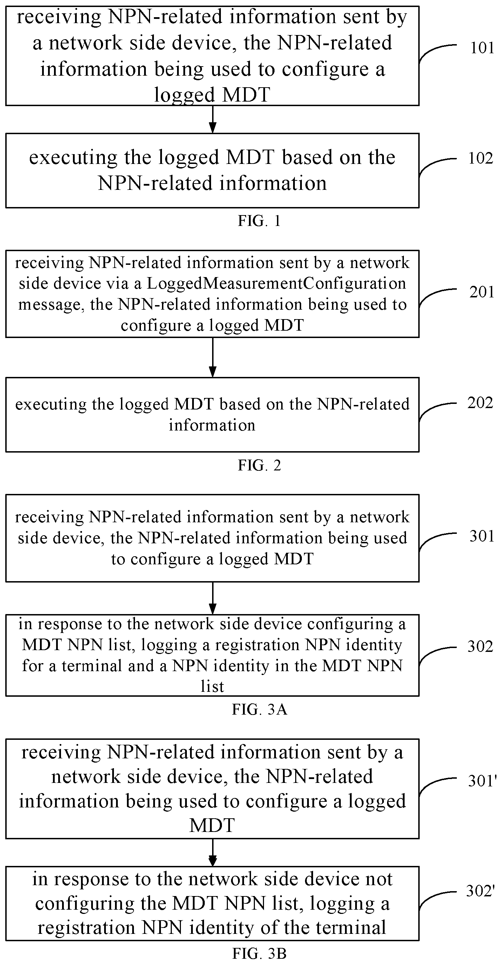

The present disclosure provides in some embodiments an MDT method. FIG. 1 is a flow chart of the MDT method according to the embodiment of the present disclosure, and the MDT method is applied to a terminal and includes the following steps.

In Step 101, NPN-related information sent by a network side device is received. The NPN-related information is used to configure a logged MDT.

In Step 102, the logged MDT is executed based on the NPN-related information.

In a possible embodiment of the present disclosure, the terminal executes at least one of logged MDT measurement logging or logged MDT measurement reporting based on the NPN-related information.

In the above embodiments of the present disclosure, the network side device configures the NPN-related information, and the terminal executes the logged MDT in a NPN scenario based on the NPN-related information. The present disclosure supports the logged MDT in the NPN scenario, expands an application scenario of the logged MDT, and achieves high availability.

Optionally, in some embodiments of the present disclosure, FIG. 2 is a flow chart of an MDT method according to the embodiment of the present disclosure, and the MDT method is applied to a terminal and includes the following steps.

In Step 201, NPN-related information sent by a network side device via a LoggedMeasurementConfiguration message is received. The NPN-related information is used to configure a logged MDT.

In Step 202, the logged MDT is executed based on the NPN-related information.

In a possible embodiment of the present disclosure, the terminal executes at least one of logged MDT measurement logging or logged MDT measurement reporting based on the NPN-related information. In the above embodiments of the present disclosure, the NPN-related information is configured by the network side device, and sent to the terminal via the LoggedMeasurementConfiguration message. The terminal executes the logged MDT measurement logging in a NPN scenario based on the NPN-related information. The present disclosure supports the logged MDT in the NPN scenario, expands an application scenario of the logged MDT, and achieves high availability.

Optionally, in some embodiments of the present disclosure, the NPN-related information includes at least one of: an MDT NPN list; a logging area; or a logging duration.

In a possible embodiment of the present disclosure, the MDT NPN list includes NPNs allowed to be logged and reported by the terminal.

In a possible embodiment of the present disclosure, the terminal executes the logged MDT measurement in the logging area.

In a possible embodiment of the present disclosure, the logging duration is used to indicate a duration of the logged MDT measurement executed by the terminal.

In the above embodiments of the present disclosure, the terminal executes the logged MDT measurement logging based on the NPN-related information, so the implementation thereof is convenient and the availability is high.

In a possible embodiment of the present disclosure, the MDT NPN list is adapted to at least one of: a management-based MDT; or a signaling-based MDT.

The management-based MDT is used for a group of terminals, and the signaling-based MDT is used for an individual terminal.

In a possible embodiment of the present disclosure, the MDT NPN list is at least one of: a CAG identity list; a PNI-NPN identity list; a NID list; or a SNPN identity list.

A PNI-NPN identity includes at least one of: a PLMN identity; or a CAG identity.

A SNPN identity includes at least one of: a PLMN identity; or a NID.

It should be appreciated that, in a case that the network side device determines that the terminal agrees to report its location information in a registration NPN, the network side device configures the MDT NPN list for the terminal.

In a possible embodiment of the present disclosure, the logging area includes a cell in a NPN in the MDT NPN list. In a case that the network side device does not configure the logging area, the terminal logs measurement values of cells in all the NPNs in the MDT NPN list.

In the embodiment of the present disclosure, the logging area includes at least one of: a cell list; a Tracking Area (TA) list; a Location Area (LA) list; or a Registration Area (RA) list. The cell list includes a NPN identity and a cell Identifier (ID).

It should be appreciated that, the cell list of the PLMN is indicated through a global cell ID. The global cell ID includes a PLMN identity and a cell ID. A cell in the cell list in the corresponding NPN is indicated through the NPN identity and the cell ID.

Once the network side device has configured the logging areas, the terminal executes the measurement logging merely in these areas. In a case that the network side device does not configure the logging area, the terminal executes the measurement logging as long as it determines that the registration NPN is in the configured NPN MDT list.

To be specific, in a case that the logging area includes the cell list, the terminal merely executes the measurement logging when it resides in these cells.

In a case that the logging area includes at least one of the TA list, the LA list or the RA list, the terminal merely executes the measurement logging when it resides in the cells belonging to a preconfigured TA, LA or RA.

In a case that the network side device does not configure the logging area, the terminal executes the logged MDT measurement as long as it determines that the registration NPN belongs to the NPN MDT list.

Optionally, the terminal determines whether or not it is located in the logging area based on an entry in npn-IdentityList in SIB1, a corresponding cell ID and a Tracking Area Code (TAC).

In a case that there is a plurality of operators in a same cell, npn-IdentityList includes a plurality of entries, and the terminal determines whether or not it is located in the logging area based on a first entry in npn-IdentityList, a corresponding cell ID and the TAC.

In a case that there is only one operator in a same cell, npn-IdentityList includes one entry, and the terminal determines whether or not it is located in the logging area based on the unique entry in npn-IdentityList, a corresponding cell ID and the TAC.

In a possible embodiment of the present disclosure, the logging duration is used to configure a timer activated at a designated time point. A timing length of the timer is equal to the logging duration.

In the embodiments of the present disclosure, in a case that the timer is activated at the designated time point, it means that the terminal receives a configured time point sent by the network side device, sets a value of Logging duration configured by the network side device as the timing length of the timer, and then activates the timer.

In the embodiments of the present disclosure, the running of the timer is not affected by a change in a state of the terminal or a change in the registration NPN. The change in the state of the terminal refers to the switching of the terminal among a connected state, an idle state and an inactive state.

It should be appreciated that, in a case that a Radio Access Type (RAT) change occurs for the terminal, the timer is stopped, and the configuration and measurement logs are eliminated. Of course, the timer may also continue to run.

The RAT change refers to the switching from a Long Term Evolution (LTE) system to a New Radio (NR) system, or from the NR system to the LTE system, which will not be particularly defined herein. A specific implementation will be described in the subsequent embodiments, and thus will not be particularly defined herein.

Optionally, in some embodiments of the present disclosure, FIG. 3A is a flow chart of an MDT method according to the embodiment of the present disclosure, and the MDT method is applied to a terminal and includes the following steps.

In Step 301, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 302, in response to the network side device configuring the MDT NPN list, a registration NPN identity of the terminal and a NPN identity in the MDT NPN list are logged.

It should be appreciated that, in a case that the network side device determines that the terminal agrees to report its location information in the registration NPN, the network side device configures the MDT NPN list for the terminal.

In the embodiments of the present disclosure, in a case that the network side device has configured the MDT NPN list, the terminal logs the registration NPN identity and the NPN identity in the MDT NPN list.

In the above embodiments of the present disclosure, in a case that the network side device has configured the MDT NPN list, the terminal logs the registration NPN identity and the NPN identity in the MDT NPN list, so as to support the logged MDT in a NPN scenario, expand an application scenario of the logged MDT, and achieve high availability.

Optionally, in some embodiments of the present disclosure, FIG. 3B is a flow chart of an MDT method according to the embodiment of the present disclosure, and the MDT method is applied to a terminal and includes the following steps.

In Step 301', NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 302', in response to the network side device not configuring the MDT NPN list, a registration NPN identity of the terminal is logged.

In the embodiments of the present disclosure, in a case that the network side device does not configure the MDT NPN list, the terminal logs the registration NPN identity of the terminal.

In the above embodiments of the present disclosure, in a case that the network side device does not configure the MDT NPN list, the terminal logs the registration NPN identity. Identically, it is able to support the logged MDT in a NPN scenario, expand an application scenario of the logged MDT, and achieve high availability.

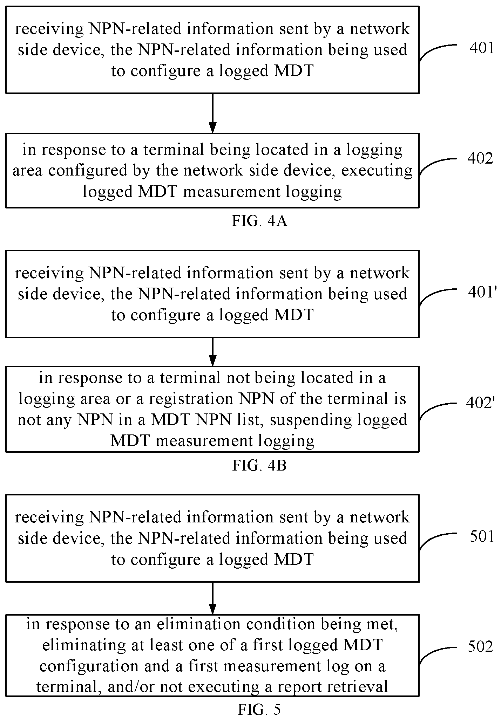

Optionally, in some embodiments of the present disclosure, FIG. 4A is a flow chart of an MDT method according to the embodiment of the present disclosure, and the MDT method is applied to a terminal and includes the following steps.

In Step 401, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 402, in response to the terminal being located in a logging area configured by the network side device, logged MDT measurement logging is executed.

In a possible embodiment of the present disclosure, in a case that the registration NPN belongs to the MDT NPN list, the terminal logs a measurement result of the registration NPN.

In the embodiments of the present disclosure, in a case that the network side device has configured the logging area, the terminal executes the logged MDT measurement logging when it is in the logging area.

It should be appreciated that, the terminal determines whether or not it is located in the logging area based on an entry in npn-IdentityList in SIB1, a corresponding cell ID and a TAC.

Optionally, in a case that there is a plurality of operators in a same cell, npn-IdentityList includes a plurality of entries, and the terminal determines whether or not it is located in the logging area based on a first entry in npn-IdentityList, a corresponding cell ID and the TAC.

Optionally, in a case that there is only one operator in a same cell, npn-IdentityList includes one entry, and the terminal determines whether or not it is located in the logging area based on the unique entry in npn-IdentityList, a corresponding cell ID and the TAC.

In another possible embodiment of the present disclosure, in a case that the network side device does not configure the logging area, the terminal executes the logged MDT measurement logging in a cell under a NPN in the MDT NPN list (not shown in FIG. 4A). In other words, in a case that the registration NPN of the terminal is any NPN in the MDT NPN list, the terminal executes the logged MDT measurement logging.

In the above embodiments of the present disclosure, a base station configures and sends the NPN-related information, and the terminal executes the logged MDT measurement logging in a designated area. As a result, it is able to support the logged MDT in a NPN scenario, expand an application scenario of the logged MDT, and achieve high availability.

Optionally, in some embodiments of the present disclosure, FIG. 4B is a flow chart of an MDT method according to the embodiment of the present disclosure, and the MDT method is applied to a terminal and includes the following steps.

In Step 401', NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 402', in response to the terminal being not located in a logging area or a registration NPN for the terminal being not any NPN in an MDT NPN list, suspending logged MDT measurement logging.

In a possible embodiment of the present disclosure, in a case that the network side device has configured the logging area, the terminal suspends the logged MDT measurement logging when it is not located in the logging area.

In another possible embodiment of the present disclosure, in a case that the network side device does not configure the logging area, the terminal suspends the logged MDT measurement logging when the registration NPN for the terminal does not belong to a cell under the NPN in the MDT NPN list.

In the embodiments of the present disclosure, the suspending the logged MDT measurement logging includes any of: reserving at least one of a first logged MDT configuration or a first measurement log; or ceasing to execute the logged MDT measurement.

The first logged MDT configuration is a logged MDT configuration including the NPN-related information on the terminal.

The first measurement log is a measurement result obtained through executing the logged MDT measurement logging based on the first logged MDT configuration.

In the above embodiments of the present disclosure, in a case that the terminal is not located in the logging area or the registration NPN is not any NPN in the MDT NPN list, the terminal suspends the logged MDT measurement logging. In other words, at least one of the first logged MDT configuration or the first measurement log is reserved, and the execution of the logged MDT measurement is ceased. Identically, it is able to support the logged MDT in the NPN scenario, expand the application scenario of the logged MDT, and achieve high availability.

Optionally, in some embodiments of the present disclosure, FIG. 5 is a flow chart of an MDT method according to the embodiment of the present disclosure, and the MDT method is applied to a terminal and includes the following steps.

In Step 501, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 502, in response to an elimination condition being met, at least one of a first logged MDT configuration or a first measurement log on the terminal is eliminated, and/or a report retrieval is not executed.

The first logged MDT configuration is a logged MDT configuration including the NPN-related information on the terminal.

The first measurement log is a measurement result obtained through executing the logged MDT measurement logging based on the first logged MDT configuration.

In a possible embodiment of the present disclosure, the elimination condition includes, but not limited to, at least one of: that a NPN selected by the terminal is not any NPN in the MDT NPN list; or that the terminal has received a second logged MDT configuration sent by the network side device.

The second logged MDT configuration is a logged MDT configuration including up-to-date NPN-related information on the terminal.

In the above embodiments of the present disclosure, in a case that the NPN selected by the terminal is not any NPN in the MDT NPN list or the terminal has received the second logged MDT configuration sent by the network side device, the terminal eliminates at least one of the first logged MDT configuration or the first measurement log on the terminal, and/or the terminal does not execute the report retrieval. In this way, it is able to ensure that the logged MDT configuration and the measurement log on the terminal are eliminated or updated in time, expand the application scenario of the logged MDT, and achieve high availability.

Optionally, in some embodiments of the present disclosure, in a SNPN, the terminal executes the logged MDT measurement logging on a NR frequency cell based on the NPN-related information.

In a PNI-NPN, the terminal executes the logged MDT measurement logging on at least one of a NR frequency cell or a LT) frequency cell based on the NPN-related information.

In the above embodiments of the present disclosure, the terminal executes the logged MDT measurement logging on the NR frequency cell and/or the LTE frequency cell based on the NPN-related information in different NPN scenarios, so the implementation thereof is convenient and the availability is high.

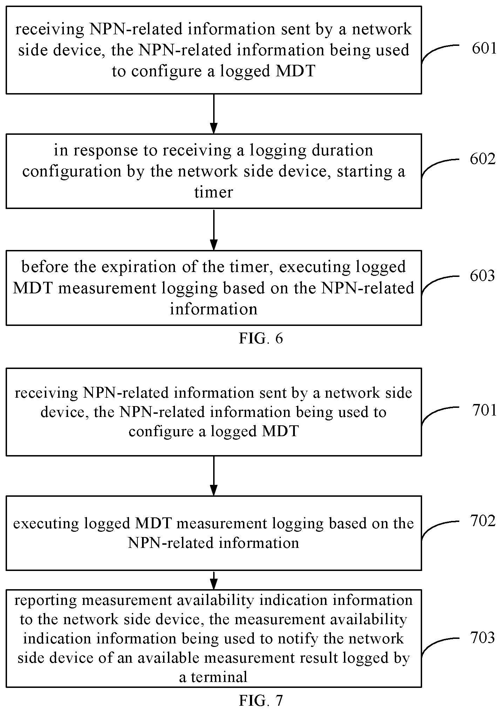

Optionally, in some embodiments of the present disclosure, FIG. 6 is a flow chart of an MDT method according to the embodiment of the present disclosure, and the MDT method is applied to a terminal and includes the following steps.

In Step 601, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 602, in response to a logging duration configured by the network side device being received, a timer is started.

Here, the timer is just a timer configured based on the logging duration.

In Step 603, before the expiration of the timer, logged MDT measurement logging is executed based on the NPN-related information.

**In** the above embodiments of the present disclosure, in a case that the terminal has received the NPN-related information sent by the network side device and the NPN-related information includes the logging duration, the timer is started. Before the expiration of the timer, the terminal executes the logged MDT measurement logging based on the NPN-related information. In this way, it is able to support the logged MDT in the NPN scenario, expand the application scenario of the logged MDT, and achieve high availability.

Optionally, in some embodiments of the present disclosure, after the timer has been started, in response to a RAT change of the terminal, whether or not to stop the timer is determined.

**In** a possible embodiment of the present disclosure, the terminal determines whether or not to stop the timer based on an agreement in a protocol.

For example, as specified in the agreement in the protocol, the timer needs to be stopped in the case of the RAT change. The terminal directly stops the timer in the case of the RAT change.

In another possible embodiment of the present disclosure, whether or not to stop the timer in the SNPN or PNI-NPN scenario is specified in the agreement in the protocol. The terminal determines whether or not stop the timer based on contents in the agreement in the protocol.

For example, as specified in the agreement in the protocol, the timer needs to be stopped in the SNPN scenario, and does not need to be stopped in the PNI-NPN scenario. The terminal stops the timer in a case that it determines that it is in the SNPN scenario, and does not stop the timer in a case that it determines that it is in the PNI-NPN scenario.

In yet another possible embodiment of the present disclosure, the terminal determines whether or not to stop the timer on its own initiative.

In still yet another possible embodiment of the present disclosure, the terminal determines whether or not to stop the timer in the SNPN or PNI-NPN scenario on its own initiative.

For example, the terminal determines to stop the timer in the case of the SNPN scenario, and determines not to stop the timer in the case of the PNI-NPN scenario.

Optionally, in some embodiments of the present disclosure, after the timer has been started, in response to the RAT change of the terminal, whether or not to eliminate at least one of a first logged MDT configuration or a first measurement log is determined.

The first logged MDT configuration is a logged MDT configuration including the NPN-related information on the terminal, and the first measurement log is a measurement result obtained through executing the logged MDT measurement logging based on the first logged MDT configuration.

In a possible embodiment of the present disclosure, the terminal determines whether or not to eliminate at least one of the first logged MDT configuration or the first measurement log based on an agreement in a protocol.

In another possible embodiment of the present disclosure, whether or not to eliminate at least one of the first logged MDT configuration or the first measurement log in the SNPN or PNI-NPN scenario is determined in the agreement in the protocol.

In yet another possible embodiment of the present disclosure, the terminal determines whether or not to eliminate at least one of the first logged MDT configuration or the first measurement log on its own initiative.

In still yet another possible embodiment of the present disclosure, the terminal determines whether or not to eliminate at least one of the first logged MDT configuration or the first measurement log in the SNPN or PNI-NPN scenario on its own initiative.

Optionally, in some embodiments of the present disclosure, after the timer has been started, in response to the RAT change of the terminal, whether or not to stop the timer and whether or not to eliminate at least one of the first logged MDT configuration or the first measurement log are determined.

A specific mode of determining whether or not to stop the timer and whether or not to eliminate at least one of the first logged MDT configuration or the first measurement log is similar to that mentioned hereinabove, and thus will not be particularly defined herein.

Optionally, in some embodiments of the present disclosure, FIG. 7 is a flow chart of an MDT method according to the embodiment of the present disclosure, and the MDT method is applied to a terminal and includes the following steps.

In Step 701, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 702, logged MDT measurement logging is executed based on the NPN-related information.

A mode of executing, by the terminal, the logged MDT measurement logging is similar to that mentioned hereinabove, and thus will not be particularly defined herein.

In Step 703, measurement availability indication information is reported to the network side device. The measurement availability indication information is used to notify the network side device of an available measurement result logged by the terminal.

In the above embodiments of the present disclosure, after executing the logged MDT measurement logging, the terminal executes the logged MDT measurement reporting to the network side device, so it is able to support the logged MDT measurement reporting in the NPN scenario, expand the application scenario of the logged MDT, and achieve high availability.

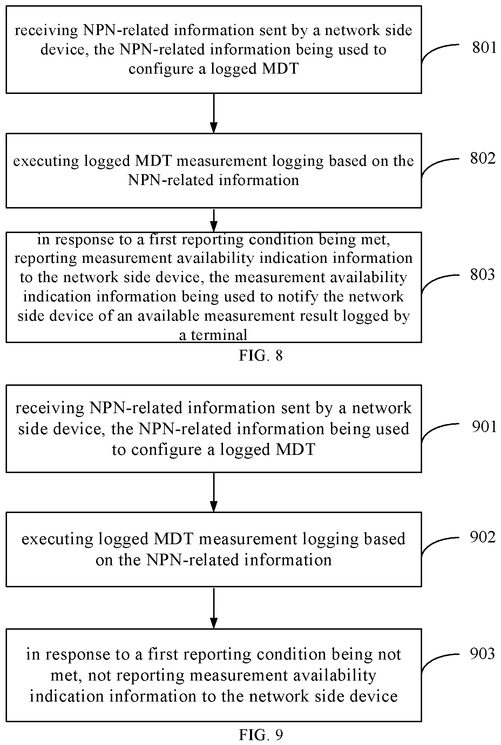

Optionally, in some embodiments of the present disclosure, FIG. 8 is a flow chart of an MDT method according to the embodiment of the present disclosure, and the MDT method is applied to a terminal and includes the following steps.

In Step 801, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 802, logged MDT measurement logging is executed based on the NPN-related information.

A mode of executing, by the terminal, the logged MDT measurement logging is similar to that mentioned hereinabove, and thus will not be particularly defined herein.

In Step 803, in response to a first reporting condition being met, measurement availability indication information is reported to the network side device. The measurement availability indication information is used to notify the network side device of an available measurement result logged by the terminal.

In a possible embodiment of the present disclosure, the first reporting condition includes, but not limited to, at least one of: that a registration NPN of the terminal is a NPN stored in the terminal; or that the terminal enters a connected state.

A NPN-identity list is stored by the terminal in VarLogMeasReport. In a case that the registration NPN is any NPN in the NPN-identity list stored in VarLogMeasReport, the terminal determines that the registration NPN of the terminal is a NPN stored in the terminal.

It should be appreciated that, in the embodiments of the present disclosure, "varlogxxxx" is a variable of a report stored locally and logged by the terminal, and "logxxxx" without "var" is a report indicating that a part of logs stored locally are reported by the terminal to the network side device.

In the above embodiments of the present disclosure, in a case that the first reporting condition is met, the terminal reports the measurement availability indication information to the network side device. In this way, it is able to support the logged MDT measurement reporting in the NPN scenario, expand the application scenario of the logged MDT, and achieve high availability.

In a possible embodiment of the present disclosure, the terminal reports the measurement availability indication information to the network side device via a designated RRC message.

To be specific, the designated RRC message includes, but not limited to, any of: a RRCSetupComplete message; a RRCResumeComplete message; a RRCReconfigurationComplete message; a RRCReestablishmentComplete message; or a UEInformationResponse message.

It should be appreciated that, the UEInformationResponse message is a message fed back by the terminal to the network side device upon the receipt of a UEInformationRequest message sent by the network side device.

Optionally, in some embodiments of the present disclosure, FIG. 9 is a flow chart of an MDT method according to the embodiment of the present disclosure, and the MDT method is applied to a terminal and includes the following steps.

In Step 901, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 902, logged MDT measurement logging is executed based on the NPN-related information.

A mode of executing, by the terminal, the logged MDT measurement logging is similar to that mentioned hereinabove, and thus will not be particularly defined herein.

In Step 903, in response to a first reporting condition being not met, measurement availability indication information is not reported to the network side device.

In a possible embodiment of the present disclosure, the first reporting condition includes, but not limited to, at least one of: that a registration NPN of the terminal is not a NPN stored in the terminal; or that the terminal enters a connected state.

The terminal stores a NPN-identity list in VarLogMeasReport. In a case that the registration NPN is not a NPN stored in the terminal and/or the terminal enters the connected state, the terminal determines that the first reporting condition is met.

In the embodiments of the present disclosure, in a case that the registration NPN of the terminal is not a NPN in VarLogMeasReport or the terminal does not enter the connected state, the terminal determines that the first reporting condition is not met, and does not report the measurement availability indication information to the network side device.

In the above embodiments of the present disclosure, in a case that the first reporting condition is not met, the terminal reports the measurement availability indication information to the network side device, so the implementation thereof is convenient, and the availability is high.

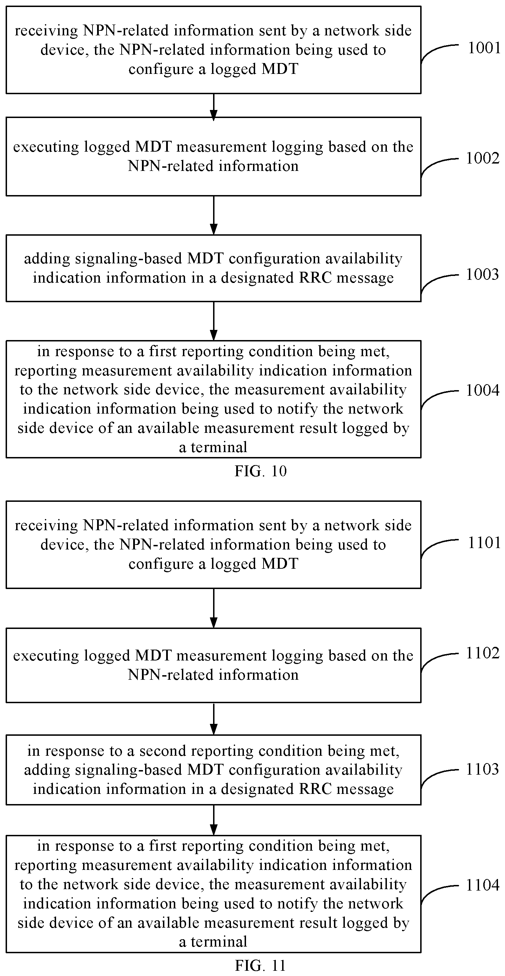

Optionally, in some embodiments of the present disclosure, FIG. 10 is a flow chart of an MDT method according to the embodiment of the present disclosure, and the MDT method is applied to a terminal and includes the following steps.

In Step 1001, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 1002, logged MDT measurement logging is executed based on the NPN-related information.

A mode of executing, by the terminal, the logged MDT measurement logging is similar to that mentioned hereinabove, and thus will not be particularly defined herein.

In Step 1003, signaling-based MDT configuration availability indication information is added in the designated RRC message.

The signaling-based MDT configuration availability indication information is used to notify the network side device of whether or not a signaling -based MDT configuration is available on the terminal.

In a possible embodiment of the present disclosure, the designated RRC message includes, but not limited to, any of: a RRCSetupComplete message; a RRCResumeComplete message; a RRCReconfigurationComplete message; a RRCReestablishmentComplete message; or a UEInformationResponse message, which will not be particularly defined herein.

It should be appreciated that, the UEInformationResponse message is a message sent by the terminal to the network side device upon the receipt of a UEInformationRequest message sent by the network side device.

In Step 1004, in response to a first reporting condition being met, measurement availability indication information is reported to the network side device. The measurement availability indication information is used to notify the network side device of an available measurement result logged by the terminal.

An implementation mode of this step is similar to that of Step 803, and thus will not be particularly defined herein.

In the above embodiments of the present disclosure, the terminal adds the signaling-based MDT configuration availability indication information in the designated RRC message, so as to notify the network side device of whether or not the signaling-based MDT configuration is available on the terminal. Hence, it is able to support the logged MDT measurement reporting in the NPN scenario, expand the application scenario of the logged MDT, and achieve high availability.

Optionally, in some embodiments of the present disclosure, FIG. 11 is a flow chart of an MDT method according to the embodiment of the present disclosure, and the MDT method is applied to a terminal and includes the following steps.

In Step 1101, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 1102, logged MDT measurement logging is executed based on the NPN-related information.

A mode of executing, by the terminal, the logged MDT measurement logging is similar to that mentioned hereinabove, and thus will not be particularly defined herein.

In Step 1103, in response to a second reporting condition being met, signaling-based MDT configuration availability indication information is added in the designated RRC message.

The signaling-based MDT configuration availability indication information is used to notify the network side device of whether or not a signaling -based MDT configuration is available on the terminal.

In a possible embodiment of the present disclosure, the second reporting condition includes, but not limited to, at least one of: that the terminal has logged a measurement result available for the NR; that a registration NPN of the terminal is a NPN stored in the terminal; that a measurement report includes sigLoggedMeasType; or that the timer is currently running.

In the embodiments of the present disclosure, in a case that the registration NPN of the terminal is any NPN in NPN-identity list stored in VarLogMeasReport, the terminal determines that the registration NPN of the terminal is a NPN stored in the terminal.

In the embodiments of the present disclosure, in a case that VarLogMeasReport includes sigLoggedMeasType, the terminal determines that the measurement report includes sigLoggedMeasType.

In the embodiments of the present disclosure, the timer is configured based on a logging duration included in the NPN-related information.

In the embodiments of the present disclosure, in a case that the second reporting condition is met, the terminal adds the signaling-based MDT configuration availability indication information in the designated RRC message. Further, the MDT configuration availability indication information in the designated RRC message is set as true, so as to notify the network side device that the signaling-based MDT configuration is available on the terminal.

In a case that the second reporting condition is not met, the terminal sets the MDT configuration availability indication information in the designated RRC message as false, so as to notify the network side device that the signaling-based MDT configuration is unavailable on the terminal. Alternatively, the MDT configuration availability indication information is not added in the designated RRC message, which will not be particularly defined herein.

In Step 1104, in response to the first reporting condition being met, measurement availability indication information is reported to the network side device via a designated RRC signaling. The measurement availability indication information is used to notify the network side device of an available measurement result logged by the terminal.

An implementation mode of this step is similar to that of Step 803, and thus will not be particularly defined herein.

In the above embodiments of the present disclosure, in a case that the second reporting condition is met, the terminal adds the signaling-based MDT configuration availability indication information in the designated RRC message, so as to notify the network side device of whether or not the signaling-based MDT configuration is available on the terminal. Hence, it is able to support the logged MDT measurement reporting in the NPN scenario, expand the application scenario of the logged MDT, and achieve high availability.

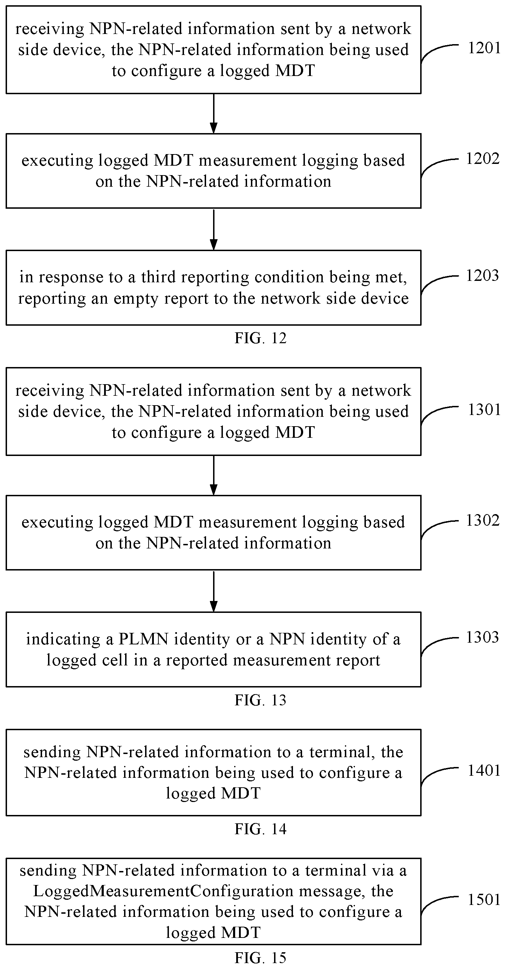

Optionally, in some embodiments of the present disclosure, FIG. 12 is a flow chart of an MDT method according to the embodiment of the present disclosure, and the MDT method is applied to a terminal and includes the following steps.

In Step 1201, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

In Step 1202, logged MDT measurement logging is executed based on the NPN-related information.

A mode of executing, by the terminal, the logged MDT measurement logging is similar to that mentioned hereinabove, and thus will not be particularly defined herein.

In Step 1203, in response to a third reporting condition being met, an empty report is reported to the network side device.

In a possible embodiment of the present disclosure, the third reporting condition includes that a registration NPN of the terminal is not a NPN in an MDT NPN list.

In the above embodiments of the present disclosure, in a case that the registration NPN is not a NPN in the MDT NPN list, the terminal reports the empty report to the network side device. Hence, it is able to support the logged MDT measurement reporting in the NPN scenario, expand the application scenario of the logged MDT, and achieve high availability.

Optionally, in some embodiments of the present disclosure, FIG. 13 is a flow chart of an MDT method according to the embodiment of the present disclosure, and the MDT method is applied to a terminal and includes the following steps.

In Step 1301, NPN-related information sent by a network side device is received. The NPN-related information is used to configure a logged MDT.

In a possible embodiment of the present disclosure, the network side device sends the NPN-related information to the terminal via a LoggedMeasurementConfiguration message.

**In** Step 1302, logged MDT measurement logging is executed based on the NPN-related information.

A mode of executing, by the terminal, the logged MDT measurement logging is similar to that mentioned hereinabove, and thus will not be particularly defined herein.

**In** Step 1303, a PLMN identity or a NPN identity of a logged cell is indicated in a reported measurement report.

**In** the embodiments of the present disclosure, the terminal indicates the PLMN identity or the NPN identity of the logged cell in VarLogMeasReport.

**In** the above embodiments of the present disclosure, it is able to support the logged MDT measurement reporting in the NPN scenario, expand the application scenario of the logged MDT, and achieve high availability.

In a possible embodiment of the present disclosure, the measurement report includes at least one of the following report parameters: a measurement result of a serving cell; an available measurement result of a neighboring cell, the neighboring cell including at least one of an intra-frequency neighboring cell, an inter-frequency neighboring cell or an inter-system neighboring cell; a time stamp; and terminal location information.

The above description is for illustrative purposes only, and the reported measurement report may further include the other parameters, which will not be particularly defined.

An MDT method provided in the embodiments of the present disclosure will be described hereinafter from the network side device.

The present disclosure provides in some embodiments an MDT method. As shown in FIG. 14 which is a flow chart of the MDT method, the MDT method is applied to a network side device. The network side device is a base station, which will not be particularly defined herein. The MDT method includes the following step.

In Step 1401, NPN-related information is sent to a terminal. The NPN-related information is used to configure a logged MDT.

In the above embodiments of the present disclosure, the network side device configures and sends the NPN-related information, so that the terminal executes the logged MDT measurement logging based on the NPN-related information. Hence, it is able to support the logged MDT in the NPN scenario, expands the application scenario of the logged MDT, and achieve high availability.

Optionally, in some embodiments of the present disclosure, FIG. 15 is a flow chart of an MDT method according to the embodiment of the present disclosure, and the MDT method is applied to a network side device. The network side device is a base station, which will not be particularly defined herein. The MDT method includes the following step.

In Step 1501, NPN-related information is sent to a terminal via a LoggedMeasurementConfiguration message. The NPN-related information is used to configure a logged MDT.

In the above embodiments of the present disclosure, the network side device configures the NPN-related information, and sends it to the terminal via the LoggedMeasurementConfiguration message, so that the terminal executes the logged MDT measurement logging based on the NPN-related information. Hence, it is able to support the logged MDT in the NPN scenario, expand the application scenario of the logged MDT, and achieve high availability.

Optionally, in some embodiments of the present disclosure, the NPN-related information includes at least one of: an MDT NPN list; a logging area; or a logging duration.

In a possible embodiment of the present disclosure, the MDT NPN list includes NPNs allowed to be logged and reported by the terminal.

In a possible embodiment of the present disclosure, the terminal executes the logged MDT measurement in the logging area.

In a possible embodiment of the present disclosure, the logging duration is used to indicate a duration of the logged MDT measurement executed by the terminal.

In the above embodiments of the present disclosure, a base station configures and sends the NPN-related information, so that the terminal executes the logged MDT measurement logging based on the NPN-related information. Hence, the implementation thereof is convenient, and the availability is high.

In a possible embodiment of the present disclosure, the MDT NPN list is adapted to at least one of: a management-based MDT; or a signaling-based MDT.

The management-based MDT is used for a group of terminals, and the signaling-based MDT is used for an individual terminal.

In a possible embodiment of the present disclosure, the MDT NPN list is at least one of: a CAG identity list; a PNI-NPN identity list; a NID list; or a SNPN identity list.

A PNI-NPN identity includes at least one of: a PLMN identity; or a CAG identity.

A SNPN identity includes at least one of: a PLMN identity; or a NID.

It should be appreciated that, in a case that the network side device determines that the terminal agrees to report its location information in a registration NPN, the network side device configures the MDT NPN list for the terminal.

In a possible embodiment of the present disclosure, the logging area includes a cell in a NPN in the MDT NPN list. In a case that the network side device does not configure the logging area, the terminal logs measurement values of cells in all the NPNs in the MDT NPN list.

In the embodiments of the present disclosure, the logging area includes at least one of: a cell list; a TA list; a LA list; or a RA list. The cell list includes a NPN identity and a cell ID.

It should be appreciated that, the cell list of the PLMN is indicated through a global cell ID. The global cell ID includes a PLMN identity and a cell ID. A cell in the cell list in the corresponding NPN is indicated through the NPN identity and the cell ID.

Once the network side device has configured the logging areas, the terminal executes the measurement logging merely in these areas. If the network side device does not configure the logging area, the terminal executes the measurement logging as long as it determines that the registration NPN is in the configured NPN MDT list.

To be specific, in a case that the logging area includes the cell list, the terminal merely executes the measurement logging when it resides in these cells.

In a case that the logging area includes at least one of the TA list, the LA list or the RA list, the terminal merely executes the measurement logging when it resides in the cells belonging to a preconfigured TA, LA or RA.

In a case that the network side device does not configure the logging area, the terminal executes the measurement logging as long as it determines that the registration NPN belongs to the NPN MDT list.

Optionally, the terminal determines whether or not it is located in the logging area based on an entry in npn-IdentityList in SIB1, a corresponding cell ID and a TAC.

In a case that there is a plurality of operators in a same cell, npn-IdentityList includes a plurality of entries, and the terminal determines whether or not it is located in the logging area based on a first entry in npn-IdentityList, a corresponding cell ID and the TAC.

In a case that there is only one operator in a same cell, npn-IdentityList includes one entry, and the terminal determines whether or not it is located in the logging area based on the unique entry in npn-IdentityList, a corresponding cell ID and the TAC.

In a possible embodiment of the present disclosure, the logging duration is used to configure a timer activated at a designated time point. A timing length of the timer is equal to the logging duration.

**In** the embodiments of the present disclosure, in a case that the timer is activated at the designated time point, it means that the terminal receives a configured time point sent by the network side device, sets a value Logging duration configured by the network side device as the timing length of the timer, and then activates the timer.

**In** the embodiments of the present disclosure, the running of the timer is not affected by a change in a state of the terminal or a change in the registration NPN. The change in the state of the terminal refers to the switching of the terminal among a connected state, an idle state or an inactive state.

It should be appreciated that, in a case that a RAT change occurs for the terminal, the timer is stopped, and the configuration and measurement logs are eliminated. Of course, the timer may also continue to run.

The RAT change refers to the switching from a LTE system to a NR system, or from the NR system to the LTE system, which will not be particularly defined herein. A specific implementation will be described in the subsequent embodiments.

In the embodiments of the present disclosure, the network side device sends the NPN-related information to the terminal, and the terminal executes the logged MDT based on the NPN-related information.

In a possible embodiment of the present disclosure, the network side device sends the NPN-related information to the terminal via a LoggedMeasurementConfiguration message.

The executing, by the terminal, the logged MDT includes, but not limited to, at least one of: executing logged MDT measurement logging; or executing logged MDT measurement reporting.

To be specific, in a case that the network side device has configured the MDT NPN list, the terminal logs a registration NPN identity of the terminal and a NPN identity in the MDT NPN list.

In a case that the network side device does not configure the MDT NPN list, the terminal logs the registration NPN identity of the terminal.

In the embodiments of the present disclosure, the terminal is located in the logging area configured by the network side device, and executes the logged MDT measurement logging. Alternatively, in a case that the network side device does not configure the logging area, the terminal executes the logged MDT measurement logging in the cell under the NPN in the MDT NPN list.

In the embodiments of the present disclosure, in a case that the terminal is not located in the logging area or the registration NPN of the terminal is not any NPN in the MDT NPN list, the logged MDT measurement logging is suspended.

In the embodiments of the present disclosure, the terminal determines that an elimination condition is met, and eliminates at least one of a first logged MDT configuration or a first measurement log on the terminal, and/or does not execute a report retrieval. In a possible embodiment of the present disclosure, the elimination condition includes, but not limited to, at least one of: that a NPN selected by the terminal is not any NPN in the MDT NPN list; or that the terminal has received a second logged MDT configuration sent by the network side device.

In the embodiments of the present disclosure, in a case that the network device has configured the logging duration, the terminal starts a timer. The timer is just a timer configured for the logging duration. Before the expiration of the timer, the terminal executes the logged MDT measurement logging based on the NPN-related information.

A procedure of executing, by the terminal, the logged MDT measurement logging has already been described hereinabove, and thus will not be particularly defined herein.

Further, after executing the logged MDT measurement logging, the terminal reports measurement availability indication information to the network side device. The measurement availability indication information is used to notify the network side device of an available measurement result logged by the terminal.

In the embodiments of the present disclosure, the network side device receives the measurement availability indication information reported by the terminal in response to a first reporting condition being met. In a possible embodiment of the present disclosure, the first reporting condition includes, but not limited to, at least one of: that a registration NPN of the terminal is a NPN stored in the terminal; or that the terminal enters a connected state.

Optionally, the terminal reports the measurement availability indication information to the network side device via a designated RRC message. The designated RRC message includes, but not limited to: a RRCSetupComplete message; a RRCResumeComplete message; a RRCReconfigurationComplete message; a RRCReestablishmentComplete message; or a UEInformationResponse message.

Of course, in response to the first reporting condition being not met, the terminal does not report the measurement availability indication information to the network side device.

In the embodiments of the present disclosure, signaling-based MDT configuration availability indication information is added in the designated RRC message. The signaling-based MDT configuration availability indication information is used to notify the network side device of whether or not a signaling-based MDT configuration is available on the terminal.

After the network side device determines an available measurement result logged by the terminal based on the received measurement availability indication information, it sends a reporting indication message to the terminal, so as to indicate the terminal to execute the logged MDT measurement reporting. Upon the receipt of the reporting indication message sent by the network side device, the terminal executes the logged MDT measurement reporting.

Optionally, the network side device receives an empty report reported by the terminal in response to a third reporting condition being met. In a possible embodiment of the present disclosure, the third reporting condition includes that a registration NPN of the terminal is not a NPN in the MDT NPN list.

Optionally, the network side device receives a measurement report reported by the terminal, and the measurement report indicates a PLMN identity or a NPN identity of a logged cell.

In a possible embodiment of the present disclosure, the measurement report includes at least one of the following report parameters: a measurement result of a serving cell; an available measurement result of a neighboring cell, the neighboring cell including at least one of an intra-frequency neighboring cell, an inter-frequency neighboring cell or an inter-system neighboring cell; a time stamp; and terminal location information.

The above description is for illustrative purposes only, and the reported measurement report may further include the other parameters, which will not be particularly defined herein.

A procedure of executing the logged MDT measurement reporting has already been described hereinabove, and thus will not be particularly defined herein.

In the above embodiments of the present disclosure, the network side device configures the NPN-related information, and the terminal executes the logged MDT in the NPN scenario based on the NPN-related information. In the embodiments of the present disclosure, it is able to support the logged MDT in the NPN scenario, expand the application scenario of the logged MDT, and achieve high availability.

In order to facilitate the understanding of the above-mentioned technical solutions, the MDT method provided in the embodiments of the present disclosure will be further described as follows.

For a terminal side
The terminal receives the NPN-related information in the LoggedMeasurementConfiguration message, and executes a logged MDT procedure based on the NPN-related information, which specifically includes at least one of the followings.
1. The terminal executes the logged MDT measurement logging based on the NPN-related information in the LoggedMeasurementConfiguration message.

The NPN-related information includes an MDT NPN list and/or a logging area.

The MDT NPN list is configured by the network side device for the terminal only in a case that the terminal agrees to report its location information in the registration NPN, i.e., in a case that the registration NPN is valid.

The executing the logged MDT measurement logging based on the NPN-related information includes the following steps.
a. In a case that the network side device has configured the MDT NPN list, the registration NPN of the terminal and the NPNs in the MDT NPN list are logged into VarLogMeasReport; otherwise, merely the registration NPN of the terminal is logged.
b. In a case that the network side device has configured the logging area, the logged MDT measurement logging is executed when the terminal is located in the logging area.
   Whether or not the terminal is located in the logging area is determined based on an entry in npn-IdentityList in SIB1 (optionally, a first entry or a unique entry), a corresponding cell ID, and a TAC.
c. In a case that the network side device does not configure any logging area, the logged MDT measurement logging is executed when the registration NPN of the terminal is in the MDT NPN list.
d. In a case that the terminal is not located in the logging area or the registration NPN of the terminal is not in the MDT NPN list, the logged MDT measurement logging is suspended, i.e., at least one of a first logged MDT configuration or a first measurement log is reserved, and/or the logged MDT measurement is ceased to be executed. The first logged MDT configuration is a logged MDT configuration including the NPN-related information on the terminal, and the first measurement log is a measurement result obtained through executing the logged MDT measurement logging based on the first logged MDT configuration.
e. In a case that the terminal has selected a NPN which is not in the MDT NPN list or a second logged MDT configuration has been received, the terminal eliminates or overwrites any previously-configured first logged MDT configuration or first measurement log, and/or does not execute the report retrieval.
f. Additionally, in the SNPN, a NR frequency cell is logged based on the NPN-related information; and in the PNI-NPN, at least one of a NR frequency cell or a LTE frequency cell is logged based on the NPN-related information.

2. The terminal executes the logged MDT measurement reporting.

The logged MDT measurement reporting includes the followings.
a. Logged MDT measurement availability indication, which includes the followings.
   (1) In a case that the registration NPN of the terminal belongs to NPN-identitylist stored in VarLogMeasReport, the terminal reports measurement availability indication information each time it enters a connected state. The measurement availability indication information is used to notify the network side device of an available measurement result logged by the terminal.

The measurement availability indication information is carried in any one of the following messages: RRCSetupComplete; RRCResumeComplete; RRCReconfigurationComplete; RRCReestablishmentComplete; or UEInformationResponse.

The UEInformationResponse message is sent to the network side device in response to the terminal receiving a UEInformationRequest message issued by a base station.
(2) In a case that a NPN where the terminal is located does not belong to NPN-identitylist stored in VarLogMeasReport, the measurement availability indication information is not reported.
(3) In a case that the terminal has logged a measurement value available for the NR, the registration NPN is included in NPN-identitylist stored in VarLogMeasReport, and VarLogMeasReport includes sigLoggedMeasType, sigLogMeasConfigAvailable is included in the message. In addition, in a case that a timer defined by the logging duration is currently running, the signaling-based MDT configuration availability indication information is added in the designated RRC message, and sigLogMeasConfigAvailable is set as true, so as to notify the network side device that the signaling -based MDT configuration is available on the terminal.

Otherwise, the signaling-based MDT configuration availability indication information is not added in the designated RRC message. Alternatively, although the signaling-based MDT configuration availability indication information is added in the designated RRC message, it is set as false, so as to notify the network side device that the signaling-based MDT configuration is unavailable on the terminal.

### b. Report retrieval

In a case that the registration NPN of the terminal does not belong to the MDT NPN list, the terminal sends an empty report.

### c. Logged measurement reporting

(1) The terminal reports a PLMN identity or a NPN identity of a logged cell.
(2) Report parameters in the measurement report include at least one of: a measurement result of a serving cell; an available measurement result of a neighboring cell, the neighboring cell including at least one of an intra-frequency neighboring cell, an inter-frequency neighboring cell or an inter-system neighboring cell; a time stamp; and terminal location information.

For the network side device
1. The network side device indicates the NPN-related information in the LoggedMeasurementConfiguration message to the terminal, so as to configure the logged MDT measurement.

The NPN-related information includes: (1) an MDT NPN list; (2) optionally a logging area; and (3) a logging duration.

The logging area includes a cell in a NPN in the MDT NPN list. In a case that the logging area is not configured, the terminal logs measurement values of cells in all NPNs in the MDT NPN list.

The logging duration is used to configure a timer activated at a designated time point. The running of the timer is not affected by a change in a state of the terminal or a change in the registration NPN.

Additionally, in a case that a RAT change occurs for the terminal, the timer is stopped and the configuration and measurement logs are eliminated. Of course, the timer may also continue to run. Whether or not to stop the timer is determined based on an agreement in a protocol or determined by the terminal on its own initiative, which will not be particularly defined herein.

The MDT NPN list includes NPNs allowed to be measured, collected, logged and reported.

The MDT NPN list is adapted to at least one of: a management-based MDT; or a signaling-based MDT.

The MDT NPN list includes at least one of: a CAG identity list; a PNI-NPN identity list; a NID list; or a SNPN identity list. A PNI-NPN identity includes at least one of a PLMN identity or a CAG identity. A SNPN identity includes at least one of: a PLMN identity; or a NID.

In addition, the present disclosure further provides specific contents of the LoggedMeasurementConfiguration message.

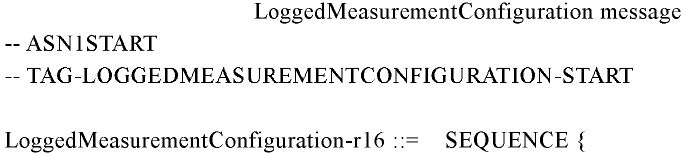

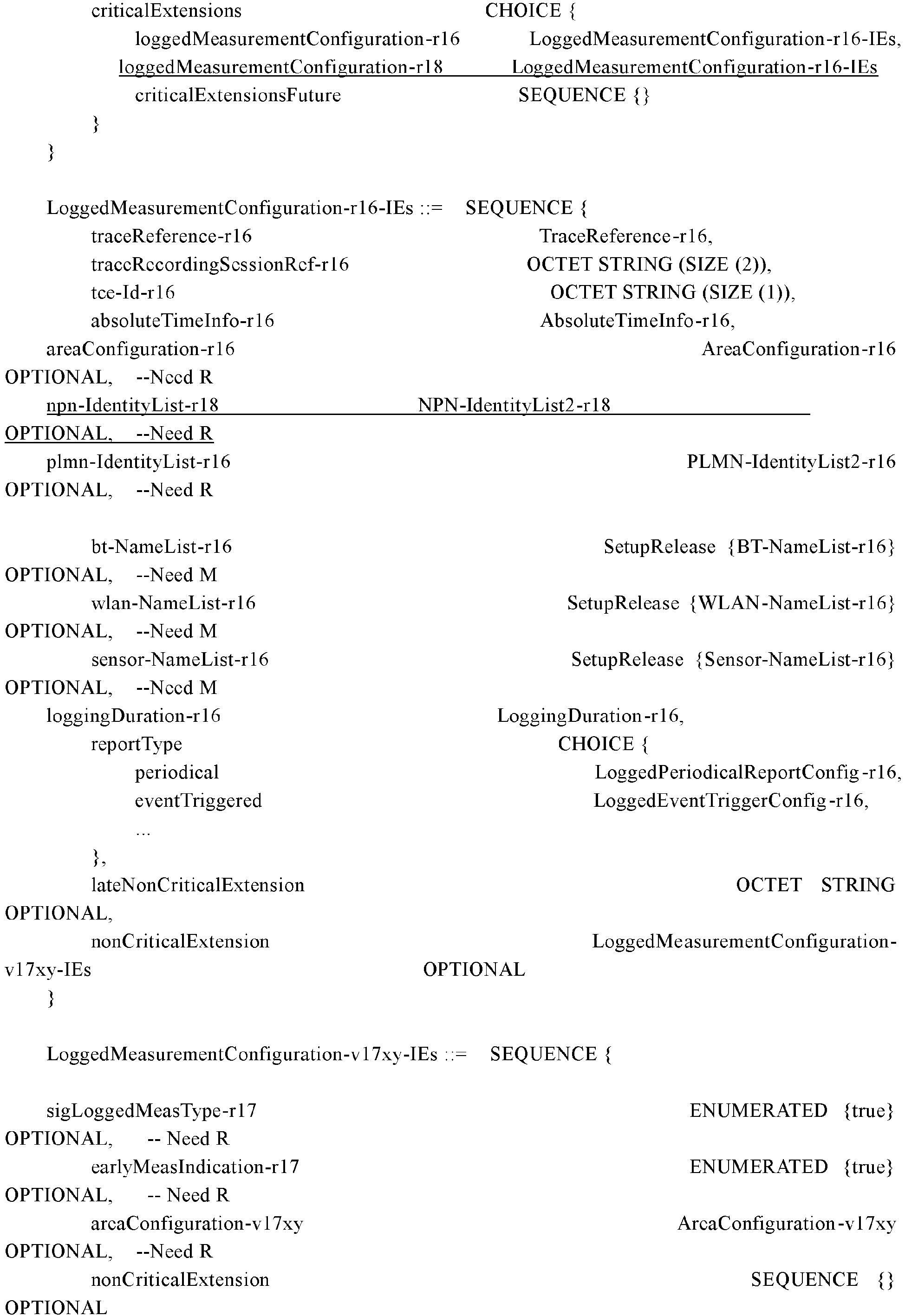

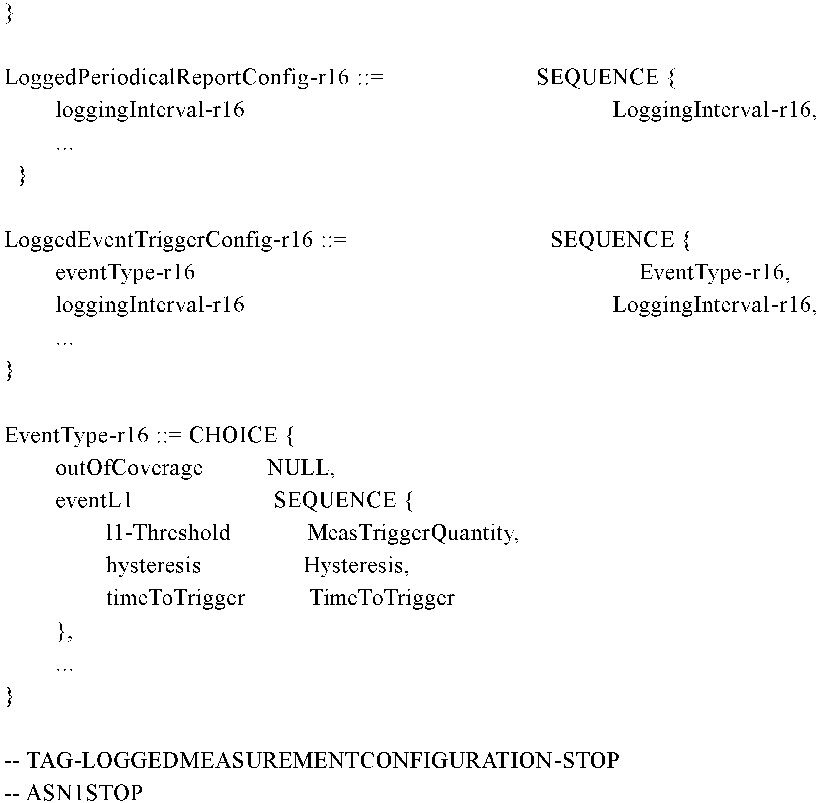

The present disclosure further provides specific contents of a VarLogMeasReport UE variable.

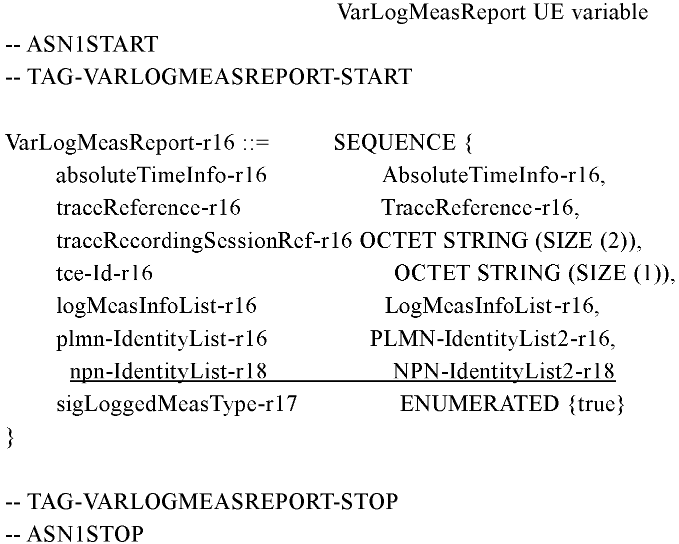

The present disclosure further provides specific contents of a NPN-IdentityList2 information element.

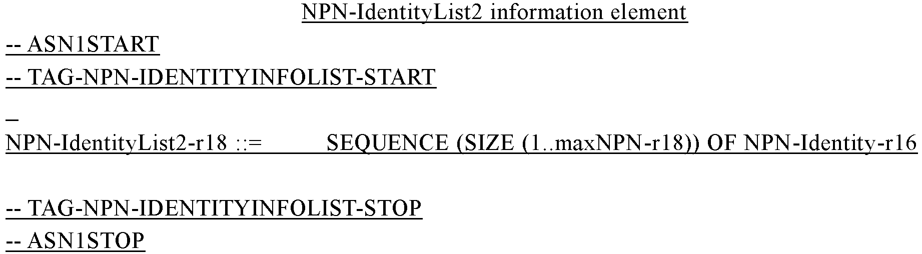

The above description is for illustrative purposes only. In actual use, based on the schemes provided in the embodiments of the present disclosure, the scheme for implementing the logged MDT in the NPN scenario and the specific contents of the information element all fall within the scope of the present disclosure.

Corresponding to the above-mentioned method embodiments for achieving the application functions, the present disclosure further provides the following apparatus embodiments for achieving the application functions.

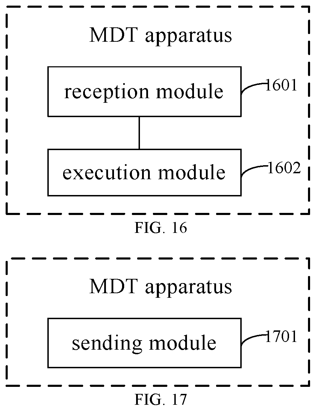

FIG. 16 is a block diagram of an MDT apparatus according to the embodiment of the present disclosure. The MDT apparatus is applied to a terminal, and includes a reception module 1601 and an execution module 1602.

The reception module 1601 is configured to receive NPN-related information sent by a network side device, and the NPN-related information is used to configure a logged MDT.

The execution module 1602 is configured to execute the logged MDT based on the NPN-related information.

FIG. 17 is a block diagram of an MDT apparatus according to the embodiment of the present disclosure. The MDT apparatus is applied to a network side device, and includes a sending module 170 1 configured to send NPN-related information to a terminal. The NPN-related information is used to configure a logged MDT.

The apparatus embodiments basically correspond to the method embodiments, the related contents can refer to part of the descriptions of the method embodiments. The above-described apparatus embodiments are merely schematic, the units described above as separate components may or may not be physically separated, and the components displayed as units may or may not be physical units, i.e., the components may be located in one area or may be distributed to multiple network units. Some or all of these modules can be selected according to practical needs to achieve the purpose of the solution of the disclosure. Those skilled in the art can understand and implement the solution without inventive works.

Correspondingly, the present disclosure further provides in some embodiments a computer-readable storage medium storing therein a computer program. The computer program is used to execute any of the above-mentioned MDT methods for the terminal.

Correspondingly, the present disclosure further provides in some embodiments a computer-readable storage medium storing therein a computer program. The computer program is used to execute any of the above-mentioned MDT methods for the network side device.

Correspondingly, the present disclosure further provides in some embodiments an MDT apparatus, which includes: a processor; and a memory storing therein an instruction executable by the processor. The processor is configured to execute any of the above-mentioned MDT methods for the terminal.

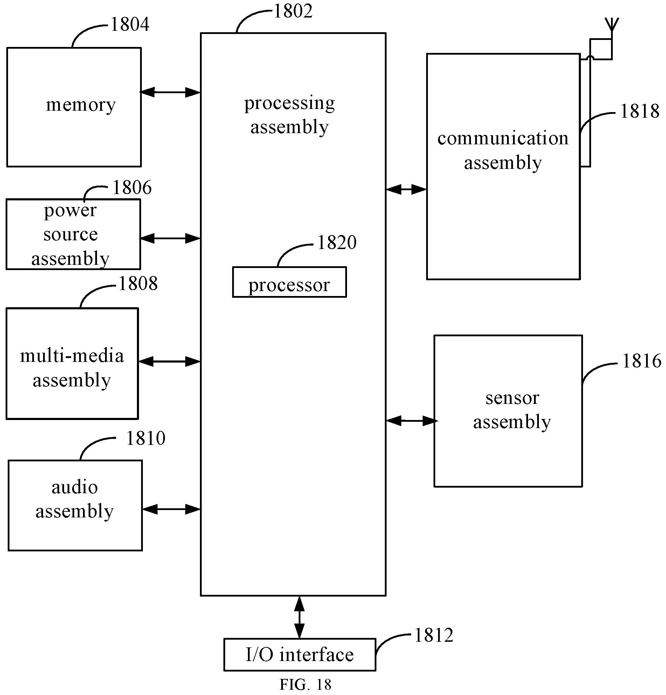

FIG. 18 is a block diagram of an MDT device 1800 according to the exemplary embodiment of the present disclosure. For example, the MDT device 1800 may be a terminal such as a mobile phone, a tablet computer, an e-book, a multi-media player, a wearable device, a vehicle-mounted user equipment, ipad, or a smart TV.

As shown in FIG. 18, the MDT device 1800 includes at least one assembly selected from the group consisting of a processing assembly 1802, a memory 1804, a power source assembly 1806, a multi-media assembly 1808, an audio assembly 1810, an Input/Output (I/O) interface 1812, a sensor assembly 1816, and a communication assembly 1818.

Generally, the processing assembly 1802 controls an entire operation of the MDT device 1800, e.g., operations associated with display, phone call, data communication, camera operation and recording operation. The processing assembly 1802 includes at least one processor 1820 to execute an instruction, so as to implement all of, or a part of, the steps of the above-mentioned MDT method. In addition, the processing assembly 1802 includes at least one module for the interaction between the processing assembly 1802 and the other assembly. For example, the processing assembly 1802 includes a multi-media module for the interaction between the multi-media assembly 1808 and the processing assembly 1802. For another example, the processing assembly 1802 reads an executable instruction from the memory, so as to implement the steps of the MDT method provided in the above-mentioned embodiments.

The memory 1804 is configured to store therein various types of data to support the operation of the MDT device 1800. Examples of such data include instructions for any application or method operated on the MDT device 1800, contact data, phonebook data, messages, pictures, video, etc. The memory 1804 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 1806 provides power to various assemblies of the MDT device 1800. The power source assembly 1806 may include a power management system, one or more power sources, and any other assemblies associated with the generation, management and distribution of power in the MDT device 1800.

The multi-media assembly 1808 includes a screen for providing an output interface between the MDT device 1800 and a user. In some embodiments of the present disclosure, the multi-media assembly 1808 includes a front-facing camera and/or a rear-facing camera. When the MDT device 1800 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 1810 is configured to output and/or input audio signals. For example, the audio assembly 1810 includes a microphone (MIC) configured to receive an external audio signal when the MDT device 1800 is in an operating mode, such as a call mode, a recording mode, and a voice recognition mode. The received audio signal may be further stored in the memory 1804 or transmitted via the communication assembly 1818. In some embodiments of the present disclosure, the audio assembly 1810 further includes a speaker to output audio signals.

The I/O interface 1812 provides an interface between the processing assembly 1802 and peripheral interface modules, such as a keyboard, a click wheel, buttons, and the like. The buttons may include, but not limited to, a home button, a volume button, a starting button, and a locking button.

The sensor assembly 1816 includes one or more sensors to provide status assessments about various aspects of the MDT device 1800. For example, the sensor assembly 1816 may detect an open/closed status of the MDT device 1800, relative positioning of assemblies, e.g., the display and the keypad, of the MDT device 1800, a change in a position of the MDT device 1800 or an assembly of the MDT device 1800, a presence or absence of user contact with the MDT device 1800, an orientation or an acceleration/deceleration of the MDT device 1800, and a change in a temperature of the MDT device 1800. The sensor assembly 1816 may include a proximity sensor configured to detect the presence of nearby objects without any physical contact. The sensor assembly 1816 may also include a light sensor, such as a Complementary Metal Oxide Semiconductor (CMOS) or Charge-Coupled Device (CCD) image sensor, for use in imaging applications. In some embodiments of the present disclosure, the sensor assembly 1816 may also include an accelerometer sensor, a gyroscope sensor, a magnetic sensor, a pressure sensor, or a temperature sensor.

The communication assembly 1818 is configured to facilitate wired or wireless communication between the MDT device 1800 and other devices. The MDT device 1800 may access a wireless network based on a communication standard, such as Wi-Fi, 2G or 3G, or a combination thereof. In an exemplary embodiment of the present disclosure, the communication assembly 1818 receives a broadcast signal or broadcast associated information from an external broadcast management system via a broadcast channel. In an exemplary embodiment of the present disclosure, the communication assembly 816 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the MDT device 1800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned MDT method for the terminal.

In the exemplary embodiment of the present disclosure, the present disclosure further provides a non-temporary computer-readable storage medium including an instruction, e.g., the memory 1804 including the instruction. The instruction is executed by the 1processor 820 of the MDT device 1800 to implement the above-mentioned MDT method. For example, the non-temporary computer-readable storage medium may be an ROM, Random Access Memory (RAM), a CD-ROM, a magnetic tape, a floppy disk, an optical data storage device, etc.

Correspondingly, the present disclosure further provides in some embodiments an MDT apparatus, which includes: a processor; and a memory storing therein an instruction executable by the processor. The processor is configured to execute the above-mentioned MDT Method for the network side device.

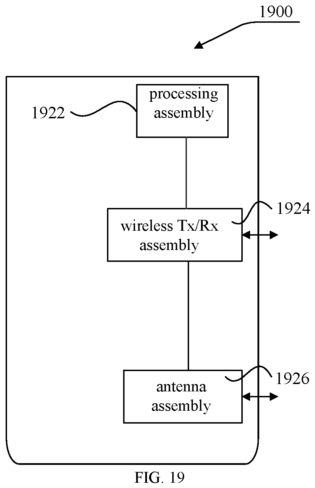

FIG. 19 is a schematic view showing an MDT device 1900 according to the embodiment of the present disclosure. The MDT device 1900 is provided as a network side device. As shown in FIG. 19, the MDT device 1900 includes a processing assembly 1922, a wireless transmission/reception assembly 1924, an antenna assembly 1926, and a signal processing section specific for a wireless interface. The processing assembly 1922 further includes at least one processor.

One processor in the processing assembly 1922 is configured to execute any of the above-mentioned MDT methods.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A Minimization of Drive-Tests (MDT) method, applied to a terminal, comprising:
receiving Non-Public Network (NPN)-related information sent by a network side device, wherein the NPN-related information is used to configure a logged MDT; and
executing the logged MDT based on the NPN-related information.

2. The MDT method of claim 1, wherein the executing the logged MDT comprises at least one of:
executing logged MDT measurement logging; or
executing logged MDT measurement reporting.

3. The MDT method of claim 1 or 2, wherein the NPN-related information comprises at least one of:
an MDT NPN list, wherein the MDT NPN list comprises NPNs allowed to be logged and reported by the terminal;
a logging area, wherein the terminal executes the logged MDT measurement in the logging area; or
a logging duration, wherein the logging duration is used to indicate a duration of the logged MDT measurement executed by the terminal.

4. The MDT method of claim 3, wherein the MDT NPN list is at least one of:
a Closed Access Group (CAG) identity list;
a Public Network Integrated NPN (PNI-NPN) identity list;
a Network Identifier (NID) list; or
a Stand-alone Non-Public Network (SNPN) identity list.

5. The MDT method of claim 4, wherein a PNI-NPN identity comprises at least one of:
a Public Land Mobile Network (PLMN) identity; or
a CAG identity.

6. The MDT method of claim 4, wherein a SNPN identity comprises at least one of:
a PLMN identity; or
a NID.

7. The MDT method of claim 2, wherein the executing the logged MDT measurement logging comprises at least one of:
logging a NPN identity in the MDT NPN list; or
logging a registration NPN identity of the terminal.

8. The MDT method of claim 7, wherein the executing the logged MDT measurement logging comprises:
in response to the network side device configuring the MDT NPN list, logging the registration NPN identity of the terminal and the NPN identity in the MDT NPN list; or
in response to the network side device not configuring the MDT NPN list, logging the registration NPN identity of the terminal.

9. The MDT method of claim 2, wherein the executing the logged MDT measurement logging comprises:
in response to the terminal being located in a logging area configured by the network side device, executing the logged MDT measurement logging.

10. The MDT method of claim 2, wherein the executing the logged MDT measurement logging comprises:
in response to the network side device not configuring a logging area, executing the logged MDT measurement logging in a cell under a NPN in the MDT NPN list.

11. The MDT method of claim 2, wherein the executing the logged MDT measurement logging comprises:
in a SNPN, executing the logged MDT measurement logging on a New Radio (NR) frequency cell; and
in a PNI-NPN, executing the logged MDT measurement logging on at least one of a NR frequency cell or a Long Term Evolution (LTE) frequency cell.

12. The MDT method of claim 2, wherein the executing the logged MDT measurement reporting comprises:
reporting measurement availability indication information to the network side device, wherein the measurement availability indication information is used to notify the network side device of an available measurement result logged by the terminal.

13. The MDT method of claim 12, wherein the reporting the measurement availability indication information to the network side device comprises:
in response to a first reporting condition being met, reporting the measurement availability indication information to the network side device.

14. The MDT method of claim 13, wherein the first reporting condition comprises at least one of:
that a registration NPN of the terminal is a NPN stored in the terminal; or
that the terminal enters a connected state.

15. The MDT method of claim 12, wherein the reporting the measurement availability indication information to the network side device comprises:
reporting the measurement availability indication information to the network side device via a designated Radio Resource Control (RRC) message.

16. The MDT method of claim 15, further comprising:
adding signaling-based MDT configuration availability indication information in the designated RRC message, wherein the signaling-based MDT configuration availability indication information is used to notify the network side device of whether or not a signaling-based MDT configuration is available on the terminal.

17. The MDT method of claim 2, further comprising:
indicating a PLMN identity or a NPN identity of a logged cell in a reported measurement report.

18. The MDT method of claim 17, wherein the measurement report comprises at least one of following report parameters:
a measurement result of a serving cell;
an available measurement result of a neighboring cell, wherein the neighboring cell comprises at least one of an intra-frequency neighboring cell, an inter-frequency neighboring cell or an inter-system neighboring cell;
a time stamp; and
terminal location information.

19. An MDT method, applied to a network side device, comprising:
sending NPN-related information to a terminal, wherein the NPN-related information is used to configure a logged MDT.

20. The MDT Method of claim 19, wherein the NPN-related information comprises at least one of:
an MDT NPN list, wherein the MDT NPN list comprises NPNs allowed to be logged and reported by the terminal;
a logging area, wherein the terminal executes the logged MDT measurement in the logging area; or
a logging duration, wherein the logging duration is used to indicate a duration of the logged MDT measurement executed by the terminal.

21. The MDT method of claim 20, further comprising:
in response to determining that the terminal agrees to report location information in a registration NPN, configuring the MDT NPN list for the terminal.

22. The MDT method of claim 20, wherein the MDT NPN list is at least one of:
a CAG identity list;
a PNI-NPN identity list;
a NID list; or
a SNPN identity list.

23. The MDT method of claim 22, wherein a PNI-NPN identity comprises at least one of:
a PLMN identity; or
a CAG identity.

24. The MDT method of claim 22, wherein a SNPN identity comprises at least one of:
a PLMN identity; or
a NID.

25. The MDT method of claim 19, further comprising:
receiving measurement availability indication information reported by the terminal, wherein the measurement availability indication information is used to notify the network side device of an available measurement result logged by the terminal.

26. An MDT apparatus, applied to a terminal, comprising:
a reception module configured to receive NPN-related information sent by a network side device, wherein the NPN-related information is used to configure a logged MDT; and
an execution module configured to execute the logged MDT based on the NPN-related information.

27. An MDT apparatus, applied to a network side device, comprising:
a sending module configured to send NPN-related information to a terminal, wherein the NPN-related information is used to configure a logged MDT.

28. A computer-readable storage medium, storing therein a computer program, wherein the computer program is used to execute the MDT method of any one of claims 1 to 18.

29. A computer-readable storage medium, storing therein a computer program, wherein the computer program is used to execute the MDT method of any one of claims 19 to 25.

30. An MDT device, comprising:
a processor; and
a memory storing therein an instruction executable by the processor,
wherein the processor is configured to execute the MDT method of any one of claims 1 to 18.

31. An MDT device, comprising:
a processor; and
a memory storing therein an instruction executable by the processor,
wherein the processor is configured to execute the MDT method of any one of claims 19 to 25.
